# EUROPÄISCHE PATENTANMELDUNG

(11) **EP 0 611 520 A1**
(43) Veröffentlichungstag der Anmeldung: **24.08.1994**
(21) Anmeldenummer: 93120659.3
(22) Anmeldetag: 22.12.1993
(51) Int. Cl.: A01D 34/73

(54) **Schneidvorrichtung für Rasenmäher**

(30) Priorität: 15.02.1993 DE 4304452
(71) Anmelder: ETESIA (Société en Commandite Simple), F-67160 WISSEMBOURG (FR)
(72) Erfinder:
(74) Vertreter: Brommer, Hans Joachim, Dr.-Ing.

(57) **Zusammenfassung**

Die Erfindung betrifft eine Schneidvorrichtung für Rasenmäher, bestehend aus einem rotierenden Träger (1), an dem mindestens zwei Messer (3) schwenkbar angeordnet sind, so daß sie beim Auftreffen auf ein Hindernis zurückschwenken und anschließend durch Fliehkraft wieder in die radiale Arbeitsstellung gelangen. Zur Begrenzung der Rückschwenkbewegung der Messer weist der Träger definierte Anschläge (5a,5b) auf, die mit entsprechenden Gegenflächen (3b) der Messer korrespondieren.

## Beschreibung

Die Erfindung geht aus von einer Schneidvorrichtung für Rasenmäher, bestehend aus einem zentral am unteren Ende einer vertikalen Antriebswelle montierten Träger, der an zumindest zwei bezüglich der Antriebswelle entgegengesetzten Seiten jeweils ein Messer trägt, das schwenkbar an dem Träger gelagert ist, so daß es durch Fliehkraft eine radial über den Träger vorstehende Arbeitsstellung einnimmt, wogegen es beim Aufprall gegen ein Hindernis zurückschwenkt.

Derartige Schneidvorrichtungen für Rasenmäher sind beispielsweise aus den deutschen Offenlegungsschriften 27 37 176 und 29 21 559 bekannt. Dabei befindet sich die Schwenklagerung der Messer in ihrem Zentrum. Der Einfluß der Fliehkraft auf die Ausrichtung der Messer in radialer Richtung ist also gering und sie weichen demzufolge schon bei leichtem Schnittwiderstand aus, so daß die Schnittleistung unbefriedigend ist. Erschwerend kommt hinzu, daß die Messer beim Auftreffen auf ein größeres Hindernis in eine länger anhaltende Eigendrehung entgegen der Drehrichtung Ihres Trägers versetzt werden. Die Schnittwirkung ist dann praktisch aufgehoben.

Eine ähnliche Schneidvorrichtung ist durch die US-PS 2 926 478 bekannt. Auch hier können die Messer beim Aufprall auf ein Hindernis nach hinten ausweichen. Im Extremfall stößt das Messer dabei gegen die Antriebswelle und verklemmt sich dort. Soweit der Träger mit Anschlägen versehen ist, greifen diese Anschläge an der Schnittseite der Messer an und verhindern, daß sie sich unter Fliehkrafteinfluß genau in die Radialposition einstellen sondern stattdessen leicht zurücklaufen, so daß sich ein ziehender Schnitt ergibt.

Ausgehend von diesem Stand der Technik liegt die Aufgabe der vorliegenden Erfindung darin, eine Schneidvorrichtung für Rasenmäher zu entwickeln, die es wie bisher gestattet, daß die Messer beim Aufprall eines Hindernisses ausweichen können, die aber andererseits sicherstellt, daß die Messer schnellstens wieder in ihre Arbeitsstellung gelangen.

Diese Aufgabe wird erfindungsgemäß dadurch gelöst, daß der Träger, an dem die Messer gelagert sind, definierte Anschlagflächen aufweist, die das Zurückschwenken der Messer begrenzen. Dadurch wird ein fortgesetztes Verdrehen der Messer um ihre eigene Achse oder ein Verklemmen mit der Antriebswelle ausgeschlossen und die Messer werden nach Erreichen des Anschlages sofort wieder durch die Fliehkraft in ihre radiale Arbeitsstellung geschwenkt. Die Messer gelangen also schneller als im bekannten Fall wieder in ihre aktive Arbeitsstellung. Zugleich wird auch die Unwucht, die sich beim Zurückschwenken der Messer in der Schneidvorrichtung einstellt, verringert.

Zweckmäßig sind dabei die Anschläge flächenhaft ausgebildet und korrespondieren mit passenden Gegenflächen der Messer, damit es im Bereich des Anschlages nicht zur Verklemmung kommen kann.

Grundsätzlich spielt es für die erfindungsgemäßen Anschläge keine Rolle, wie die Schneidvorrichtung konstruktiv aufgebaut ist. Eine besonders zweckmäßige Ausgestaltung der Erfindung ergibt sich aber dann, wenn der Träger die Form einer Kreisscheibe hat und wenn die an der Unterseite der Kreisscheibe gelagerten Messer an ihrem rückseitigen Bereich nach oben abgebogene Flügel aufweisen, um das Schnittgut automatisch auszuwerfen. In diesem Fall wird erfindungsgemäß vorgeschlagen, daß die Kreisscheibe an ihrem Umfang Ausnehmungen aufweist, in die zumindest die genannten Flügel beim Zurückschwenken der Messer eintauchen können. Die Messer können dadurch kompakt am Träger gelagert werden, ohne daß er das Zurückschwenken verhindert.

Zweckmäßig sind die Ausnehmungen so bemessen und die Anschläge derart positioniert, daß die Messer in zurückgeschwenkter Stellung vollständig innerhalb des Scheibendurchmessers liegen. Es steht also nichts mehr über den Scheibendurchmesser vor, das mit einem eventuellen Hindernis kollidieren könnte.

Dabei hat es sich als günstig erwiesen, wenn die Ausnehmungen an ihrem in Drehrichtung hinten liegenden Bereich selbst als Anschlag fungieren, indem dort die Flügel der Messer anstoßen. Man braucht dadurch für die Anschläge keine zusätzlichen Teile montieren.

Damit die Ausnehmungen keine Stoßkanten für eventuelle Hindernisse bilden, empfiehlt es sich, daß sie an ihrem in Drehrichtung hinten liegenden Bereich nach außen hin zusätzlich eine Abbiegung oder Abknickung nach hinten aufweisen.

Weitere Merkmale und Vorteile der Erfindung ergeben sich aus der nachfolgenden Beschreibung eines Ausführungsbeispieles anhand der Zeichnung; dabei zeigt
- Figur 1: die Schneidvorrichtung in der Seitenansicht;
- Figur 2: die gleiche Schneidvorrichtung in einer Ansicht von oben und
- Figur 3: einen vergrößerten Schnitt längs der Linie A-A.

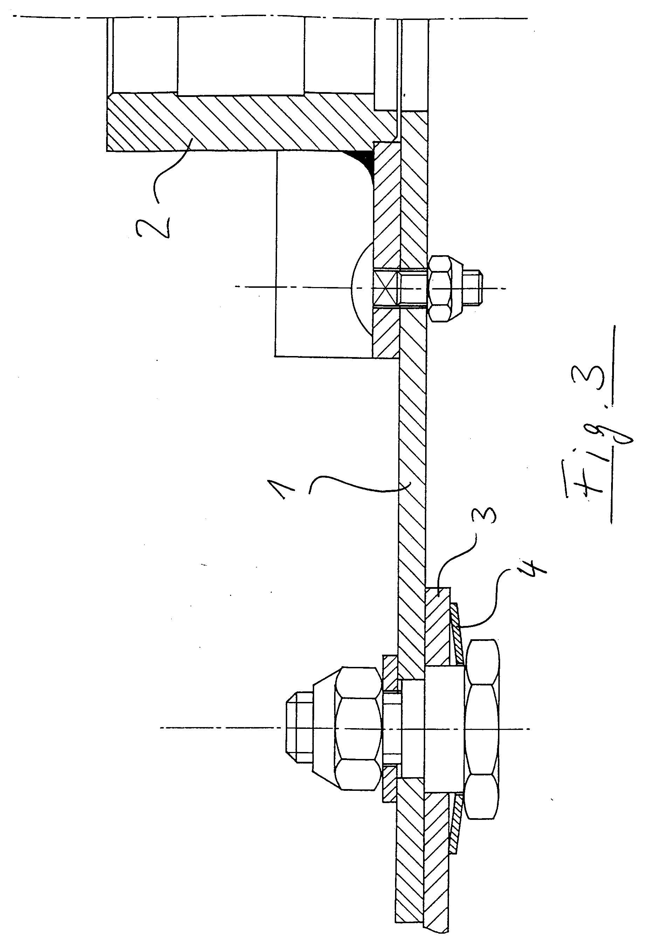

Ein Träger 1 ist über eine zentrale Nabe 2 drehfest mit einer in der Zeichnung nicht dargestellten, nach oben abgehenden Antriebswelle eines Rasenmähermotores verbunden. An zwei diametral zur Nabe angeordneten Bohrungen des Trägers 1 ist jeweils an dessen Unterseite ein Messer 3 gelagert. Die Einzelheiten dieser Lagerung ergeben sich aus Figur 3, nämlich die Verspannung des Messers 3 am Träger 1 mit Hilfe einer Tellerfeder 4. Dadurch entstehen an den Berührflächen zwischen Träger 1 und Messer 3 beträchtliche Reibungskräfte, so daß das Messer nicht lose hin und herschwenken kann sondern erst nach Überwindung dieser Reibungskräfte.

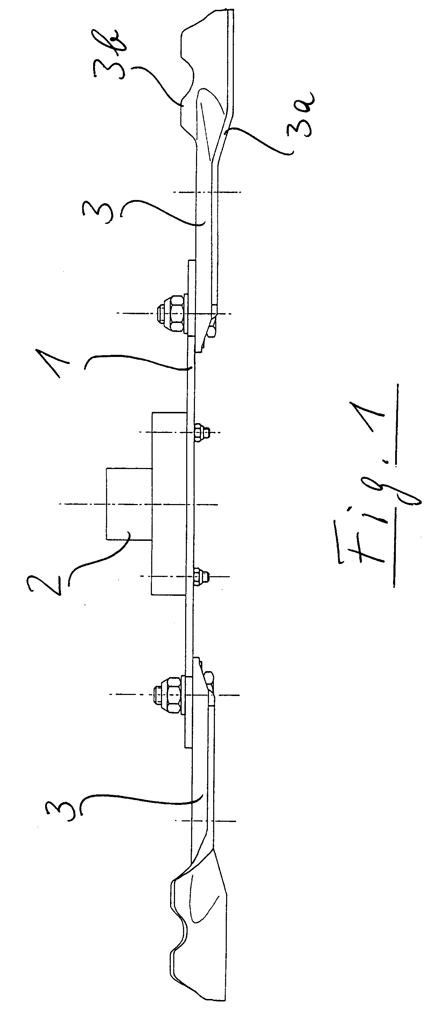

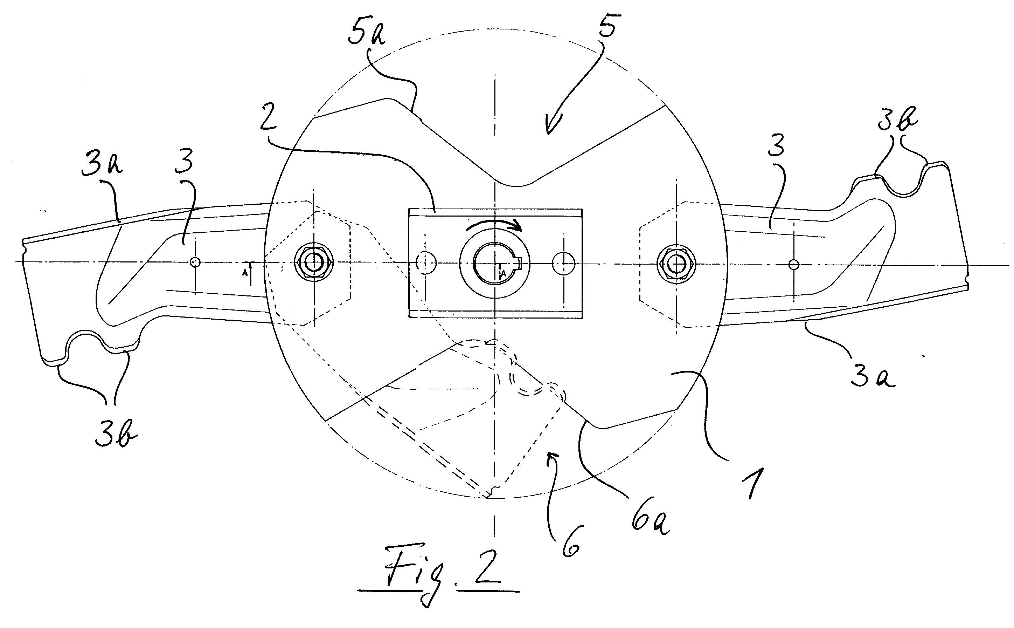

In den Figuren 1 und 2 sieht man außerdem, daß die Messer 3 an ihren den Schneidkanten 3a gegenüberliegenden Seiten nach oben abgebogene Flügel 3b aufweisen. Diese Flügel bewirken bei der Rotation des Trägers 1 eine Luftströmung, die das abgeschnittene Gras nach außen in einen Grasfangsack befördert.

Wesentlich ist nun, daß in den Träger 1 ausgehend von der Form einer Kreisscheibe zwei nach außen offene Ausnehmungen 5 und 6 eingearbeitet sind. Diese Ausnehmungen sind etwa V-förmig und bezüglich der Lagerbohrungen für die beiden Messer jeweils um etwa 90° in Umfangsrichtung versetzt angeordnet. Sie sind in der Größe so bemessen, daß jeder Flügel 3 beim Aufprall auf ein Hindernis soweit in die ihm zugeordnete Ausnehmung eintauchen kann, daß praktisch nichts mehr über den Drehkreis des Trägers 1 vorsteht. Diese Stellung ist gestrichelt in Figur 2 dargestellt.

Man erkennt dort außerdem, daß die in Drehrichtung hinten liegende Kante 5a bzw. 6a einen definierten Anschlag bildet, an dem die nach oben abgebogenen Flügel 3b der Messer anstoßen.

Im weiteren Verlauf ist die Kante 5a bzw. 6a nach hinten abgebogen, so daß sie stumpfwinklig ohne scharfe Stoßkante in die kreisbogenförmige Umfangsfläche des Trägers 1 übergeht.

Ist das Messer an dem Anschlag 5a bzw. 6a angestoßen, so wird es sofort durch die einwirkende Fliehkraft wieder in die radial über den Träger 1 vorstehende Arbeitsposition verschwenkt. Damit dabei die Schneidkante 3a mit der maximal wirksamen Länge umläuft, ist der Schwerpunkt des Messers etwas nach hinten versetzt, so daß die vom Luftwiderstand ausgeübte Rückstellkraft etwa kompensiert wird.

Zusammenfassend zeichnet sich die Erfindung also dadurch aus, daß den Messern eine definierte Rückzugsposition gegeben wird, in der sie vollständig oder nahezu vollständig innerhalb des vom Träger 1 überstrichenen Drehbereiches liegen, daß sie aus dieser Rückzugsposition sofort wieder in die radial vorstehende Arbeitsstellung verschwenken können und daß all dies ohne zusätzliche Montageteile realisiert wird.

## Patentansprüche

1. Schneidvorrichtung für Rasenmäher, bestehend aus einem zentral am unteren Ende einer vertikalen Antriebswelle montierten Träger, der an zumindest zwei bezüglich der Antriebswelle entgegengesetzten Seiten jeweils ein Messer trägt, das schwenkbar an dem Träger gelagert ist, so daß es durch Fliehkraft eine radial über den Träger vorstehende Arbeitsstellung einnimmt, wogegen es beim Aufprall gegen ein Hindernis zurückschwenkt,
dadurch gekennzeichnet,
daß der Träger (1) definierte Anschläge (5a, 6a) aufweist, die das Zurückschwenken der Messer (3) begrenzen.

2. Schneidvorrichtung nach Anspruch 1,
dadurch gekennzeichnet,
daß die Messer (3) entsprechende Gegenflächen (3b) aufweisen, die mit den Anschlägen (5a, 6a) korrespondieren.

3. Schneidvorrichtung nach Anspruch 1,
dadurch gekennzeichnet,
daß die Messer (3) an ihrem rückwärtigen Bereich nach oben abgebogene Flügel (3b) aufweisen und daß der Träger (1) etwa die Form einer Kreisscheibe hat, die an ihrem Umfang Ausnehmungen (5, 6) aufweist, in die zumindest die genannten Flügel (3b) beim Zurückschwenken der Messer (3) eindringen.

4. Schneidvorrichtung nach Anspruch 3,
dadurch gekennzeichnet,
daß die Ausnehmungen (5, 6) so bemessen und die Anschläge (5a, 6a) derart positioniert sind, daß die Messer (3) in zurückgeschwenkter Stellung nahezu vollständig innerhalb der vom Träger (1) bei seiner Rotation überstrichenen Kreisfläche liegen.

5. Schneidvorrichtung nach Anspruch 3,
dadurch gekennzeichnet,
daß die Ausnehmungen (5, 6) an ihrem in Drehrichtung hinten liegenden Bereich als Anschlag (5a, 6a) fungieren.

6. Schneidvorrichtung nach Anspruch 1,
dadurch gekennzeichnet,
daß die Flügel (3b) der Messer (3) als mit den Anschlägen (5a, 6a) korrespondierende Gegenflächen fungieren.

7. Schneidvorrichtung nach Anspruch 3,
dadurch gekennzeichnet,
daß die Ausnehmungen (5, 6) an ihrem in Drehrichtung hinten liegenden Bereich nach außen hin zusätzlich nach hinten abbiegen.
